# EUROPEAN PATENT SPECIFICATION

(11) **EP 1 523 828 B1**
(45) Date of publication and mention of the grant of the patent: **03.01.2007**
(21) Application number: 02717207.1
(22) Date of filing: 10.04.2002
(51) Int. Cl.: H04L 12/28

(54) **METHOD FOR SEPARATING MULTIPLE HOME NETWORKS**
VERFAHREN ZUM ABTRENNEN MEHRERER HAUSNETZE
PROCEDE DE SEPARATION DE RESEAUX DOMESTIQUES MULTIPLES

(30) Priority: 01.04.2002 KR 2002017807
(43) Date of publication of application: 20.04.2005
(73) Proprietor: LG ELECTRONICS INC., Seoul (KR)
(72) Inventor: BAEK, Seung Myun, Changwon-shi, Kyongsangnam-do 641-180 (KR); LEE, Koon Seok, Kyongsangnam-do 641-241 (KR); CHOI, Hwan Jong, Gyeongsangnam-do, 626-762 (KR); LIM, Jeong Hyun, Kimhae-shi, Kyongsangnam-do 621-800 (KR)
(74) Representative: Schorr, Frank Jürgen
(86) International application number: PCT/KR2002/000654
(87) International publication number: WO 2003/084143

(56) References cited:
- EP-A- 0 905 590
- EP-A2- 0 120 640
- WO-A-01/52515
- US-A- 5 579 221
- US-A- 6 058 355
- BRUNO JEAN-BART ET AL: "PREISWERTE HAUS-BUS-KOMMUNIKATION RUECKT NAEHER DIE EUROPAEISCHEN POWERLINE-AKTIVITAETEN" ELEKTRONIK, WEKA FACHZEITSCR.-VERLAG, MUNCHEN, DE, vol. 47, no. 17, 18 August 1998 (1998-08-18), pages 74-77, XP000847930 ISSN: 0013-5658
- NASU T., NAKAGAWA M.: 'Hybrid-coding and code-distinction for wireless1394 home-link' VEHICULAR TECHNOLOGY CONFERENCE, VTC 1999-FALL, IEEE VTS 50TH vol. 1, 1999, pages 507 - 511, XP000905296
- SAITO T. ET AL.: 'Home gateway architecture and its implementation' IEEE TRANSACTIONS ON CONSUMER ELECTRONICS vol. 46, no. 4, November 2000, pages 1161 - 1166, XP001093610

## Description

### Technical Field

The present invention relates to a home network system, and more particularly, to a method for identifying multiple home networks sharing a communication line.

### Background Art

WO 01/52515 discloses a communication and control system and methods according to the preamble of independent claim 1. A plurality of networks used in the system may be coupled to a same power distribution trunk that is used as a communication line. Thus, it is possible for signals from one network to propagate to another network coupled to the same power distribution trunk. Each network comprises a plurality of interconnected devices that may be controlled by a controller. A house code is assigned to each device within one network, such that devices within one network can only communicate with a controller within the same network and not with controllers located in other networks coupled to the same power distribution trunk.

US 5 579 221 discloses a home automation system having a user controlled definition function being operated in response to input of an inherent call code. The system includes power line controller modules for switching power to appliances connected thereto in response to receipt of a control code. Each of the power line controller modules has an associated house code and unit code. The house code refers to an inherent household number and the unit code refers to a power line controller module unit number. A user manually sets these codes by a dual-in-line-switch DIP installed on the interior of power line controller modules.

Home automation is discussed in the essay "PREISWERTE HAUS-BUSKOMMUNIKATION REUCKT NAEHER - DIE EUROPAEISCHEN POWERLINE-AKTIVITAETEN" by Bruno Jean-Bart, et. al. published in Elektronik 17/1998 on pages 74-77). The proposed method is based on the European home systems EHS. To allow communication within the system, a unique address has to be allocated to each device in the system. In this respect two approaches are proposed. According to a first approach called "Distributed address assignment", the device chooses an arbitrary address itself, and sends a message to this address. If no answer is received in response to this message, it is assumed that the address is not yet used in the system and the address is then assigned to the device. According to a second approach, individual addresses are retrieved from a separate node of the system that monitors the addresses used in the system.

Currently, the home automation almost comes to a stage to put into practical use, in which home appliances are controlled automatically in a home or far from the home. Though an initial home automation is at a level the appliances are controlled separately by using a telephone line or an infrared ray, without interconnection between the appliances, currently a method is used, in which a network of the appliances are constructed by employing communication means, and a controller for controlling the network is provided, for integrated management of the network.

The home network may be constructed by using an exclusive communication line for each home, or multiple home networks may be constructed by using a power line or a common communication line like a radio communication.

In a case the home networks sharing the communication line are to be constructed, a technology for exact identification of a home network for each home is absolutely required for making reliable and effective communication within entire network.

Presently, related art home networks sharing the communication line are under development, up to a stage to construct a conceptual system merely, but without practical application to each home, with the homes identified effectively.

### Disclosure of Invention

An object of the present invention designed for solving the foregoing problem lies on providing a method for identifying multiple home networks, in which each home network can be identified exactly, for making an effective communication.

The above object is solved in a method comprising the features of the preamble of independent claim 1 by the features of the characterizing part of claim 1. Preferred embodiments are defined in the dependent claims.

There is provided a method for identifying multiple home networks including the steps of setting a house code to each of adapters to the home appliances for identifying home networks, receiving a packet including the house code on the communication line at the adapters, and comparing a preset house code to the house code included in the packet, and one of the adapters understanding that the packet is directed to the one of the adapters if the two house codes are in conformity as a result of the comparison, and transferring the packet to one of the home appliances connected thereto.

### Brief Description of Drawings

The accompanying drawings, which are included to provide a further understanding of the invention, illustrate embodiments of the invention and together with the description serve to explain the principles of the invention:

In the drawings:
FIG. 1 illustrates a layout of home networks sharing a communication line in accordance with a preferred embodiment of the present invention;
FIG. 2 illustrates a block diagram of a detail system of the appliances and the power line communication adapters in FIG. 1;
FIGS. 3A - 3C illustrate structures of communication packets transmitted in FIG. 1;
FIG. 4 illustrates a flow chart showing the steps of a method for setting a code for identifying multiple home networks of the present invention;
FIGS. 5A - 5C illustrate structures of communication packets transmitted in FIG. 4; and
FIG. 6 illustrates a flow chart showing the steps of a method for identifying multiple home networks in accordance with a preferred embodiment of the present invention.

### Best Mode for Carrying Out the Invention

Reference will now be made in detail to the preferred embodiments of the present invention, examples of which are illustrated in the accompanying drawings. In explaining the embodiments, the same names and reference symbols will be given to the same parts, and iterative description of the parts will be omitted.

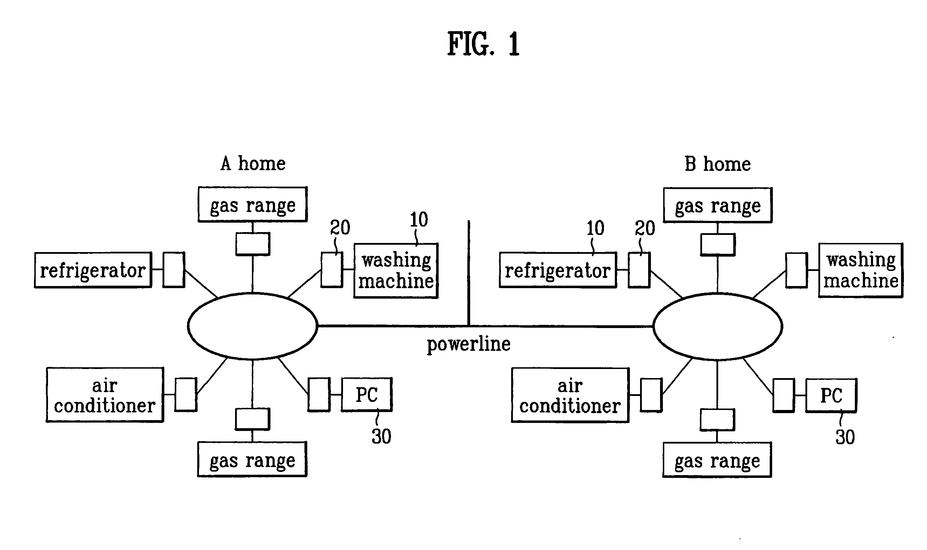

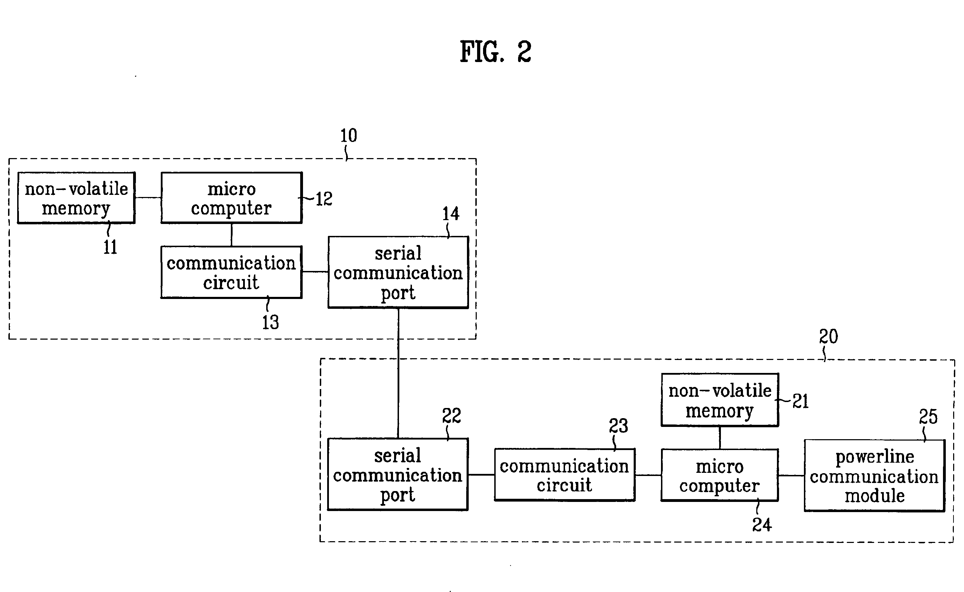

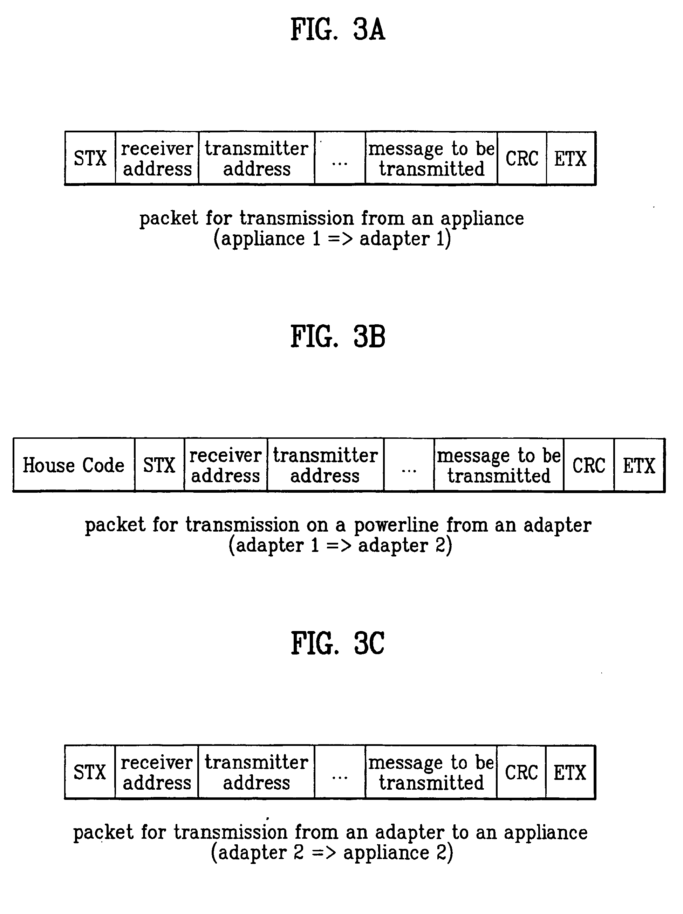

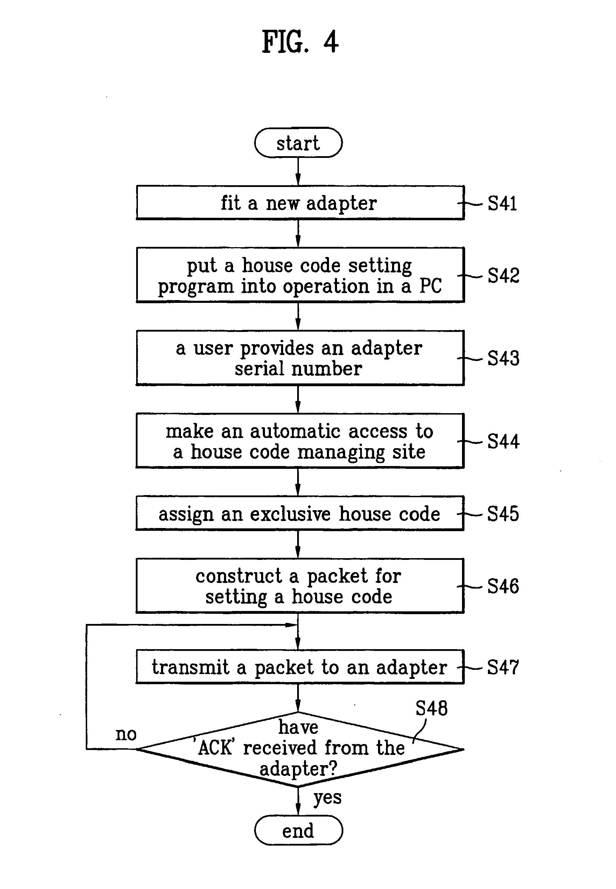

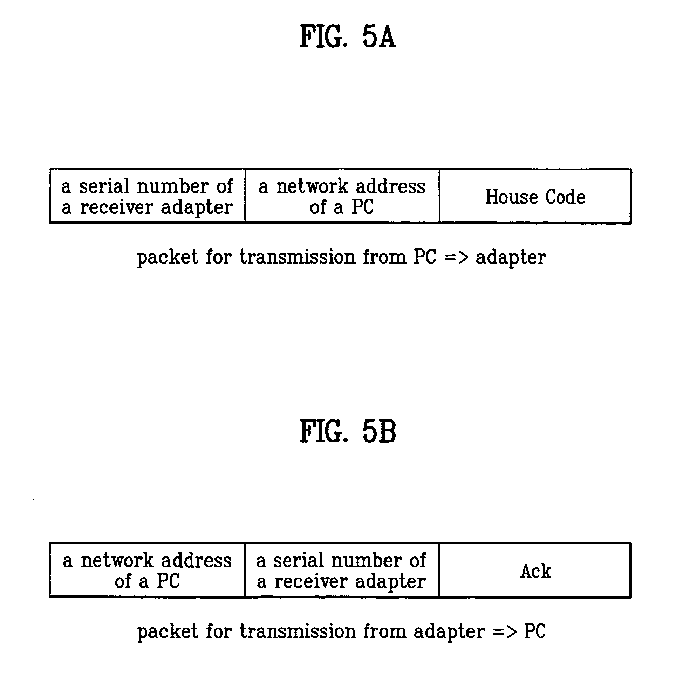

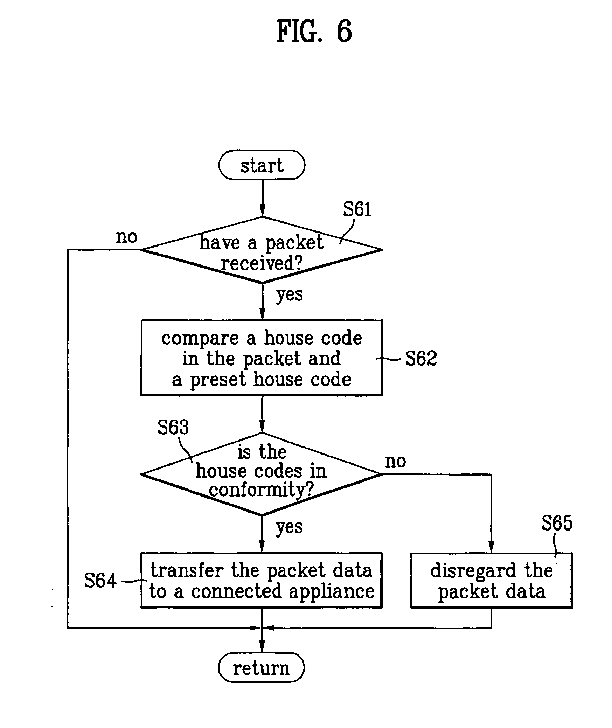

FIG. 1 illustrates a layout of home networks sharing a communication line in accordance with a preferred embodiment of the present invention, FIG. 2 illustrates a block diagram of a detail system of the appliances and the power line communication adapters in FIG. 1, FIGS. 3A - 3C illustrate structures of communication packets transmitted in FIG. 1, FIG. 4 illustrates a flow chart showing the steps of a method for setting a code for identifying multiple home networks of the present invention, FIGS. 5A - 5C illustrate structures of communication packets transmitted in FIG. 4, and FIG. 6 illustrates a flow chart showing the steps of a method for identifying multiple home networks in accordance with a preferred embodiment of the present invention.

There are home network systems sharing a communication line of a power line of the present invention illustrated in FIG. 1.

That is, a home 'A' and a home 'B' have home networks constructed respectively to share a communication line of a power line, with home appliances 10 in each of the homes connected to the power line through a power line communication adapters 20. A PC 30 in each home serves as a controller for controlling the network.

A detailed system of FIG. 1 is illustrated in FIG. 2.

That is, each appliance 10 includes a non-volatile memory 11, a microcomputer 12 for operation of the appliance and communication control, a serial communication port 14 for transmission/reception of data, and each of the adapters 20 includes a non-volatile memory 21, a serial communication port 22 for communication with the serial communication port 14 of the appliance 10, a communication circuit 23, a communication control microcomputer 24, and a power line communication module 25 for enabling data communication through the power line. The serial communication port 14 of each of the appliances 10 and the serial communication port 22 of the adapter 20 are connected, and the power line communication module 25 of each of the adapters 20 is connected to the power line.

Structures of transmission packets of the appliances of the foregoing home networks are illustrated in FIGS. 3A - 3C. Referring to FIG. 3A, a transmission packet from the appliance 10 to the adapter 20 includes an 'STX (starting code)', 'a receiver address', 'message to be transmitted', a 'CRC' (an error check code), and 'ETX (termination code)'. Referring to FIG. 3B, a transmission packet from the adapter 20 to the power line includes a 'house code', an 'STX', a 'receiver address', a 'transmitter address', a 'message to be transmitted', a 'CRC', and an 'ETX'. Referring to FIG. 3C, a transmission packet from the adapter 20 to the appliance 10 includes an 'STX', a 'receiver address', a 'transmitter address', a 'message to be transmitted', a 'CRC', and an 'ETX'. That is, the 'house code' is added only when a transmission is made through the power line.

At first, it is required that a method for identifying multiple home networks of the present invention is started from setting a house code to each of adapters 20 for identifying respective homes. Accordingly, the house code setting will be explained in detail, with reference to FIG. 4.

A user or a service man from a manufacturer connects the adapter 20 to an appliance 10 (S41).

Then, a program for setting a house code is put into operation in a PC 30 (S42). The program may be downloaded through Internet, or provided in a form of a CD or a diskette.

A serial number of the user fitted adapter 200 is provided to the operative program for setting a house code (S43).

Then, when the serial number is provided, the program for setting a house code makes an automatic access to a house code managing site (S44).

Then, the accessed house code managing site assigns its own house code not in use at the present time, and transfers to the PC 30 (S45).

Then, referring to FIG. 5A, the house code setting program in the PC 30 constructs a packet including 'a receiver adapter serial number' defining a receiver address, 'a PC network address' defining a transmitter address, and 'the house code' assigned from the managing site. (S46).

Then, the house code setting program transfers the packet to the adapter 20 (S47).

Then, reception of 'ACK' from the adapter 20 is determined (S48), and a determination that the house code setting is finished is made and the process is terminated if the 'ACK' is received, or the transfer of the packet is repeated if no 'ACK' is received.

In this instance, upon reception of the packet as shown in FIG. 5A, the adapter 20 responds with a packet constructed to include 'a PC network address' defining a receiver address, 'a receiver adapter serial number' defining a transmitter address, and the 'ACK' as shown in FIG. 5B.

In the meantime, a method for identifying respective home networks in transmission of the packet after finishing the house code setting as shown in FIG. 4 will be explained, with reference to FIG. 6.

Each of the adapters 20 determines if a packet is received through a power line (S61). If the packet is received as a result of the determination (S61), each of the adapters 20 compares the house code in the packet to the house code set in the setting of the house code (S62).

Then, conformity of the house codes is determined (S63) as a result of the comparison (S62), and the packet is transferred to a connected appliance 20 if the house codes are in conformity (S64).

Opposite to this, if the house codes are not in conformity as the result of the determination (S63), the packet is disregarded (S65).

Eventually, if a packet is transmitted through a common communication line, a power line, only a relevant appliance receives the packet, decodes to carry out a required operation order, without giving influence to other appliances.

It will be apparent to those skilled in the art that various modifications and variations can be made in the method for identifying multiple home networks of the present invention without departing from the scope of the invention. Thus, it is intended that the present invention cover the modifications and variations of this invention provided they come within the scope of the appended claims and their equivalents.

### Industrial Applicability

The method for identifying multiple home networks having a common communication line can identify a home network in multiple home networks having a common communication line effectively by a simple setting and an algorithm addition without additional hardware, whereby permitting to make an efficient and reliable communication.

## Claims

1. A method for identifying multiple home networks each having a plurality of home appliances connected to respective adapters and a network controller, wherein an address is assigned to each home appliance, and at least two home networks share one communication line, the method comprising the steps of:
setting a house code to each of the adapters connected to the home appliances for identifying home networks; and
receiving a packet including the house code on the communication line at the adapters;
comparing a house code set to each of the adapters to the house code included in the packet; and
one of the adapters understanding that the packet is directed to the one of the adapters if the two house codes are in conformity as a result of the comparison, and transferring the packet to one of the home appliances connected thereto,
**characterized in that** the step of setting a house code includes the steps of:
putting a house code setting program into operation in the network controller,
providing a serial number of the adapter and making access to a house code managing site on the Internet in the program,
receiving an own house code assigned from the house code managing site and transferring said house code to the relevant adapter, and
the adapter storing the house code to a relevant memory region.

2. A method as claimed in claim 1, wherein the step of providing a serial number of the adapter and making access to a house code managing site on the Internet in the program includes the step of making an automatic access to the house code managing site once the serial number for the adapter is provided.

3. A method as claimed in claim 1, further comprising the step of the adapters disregarding the received packet if the two house codes are not in conformity as the result of comparison.

## Patentansprüche

1. Verfahren zum Identifizieren mehrerer Heimnetzwerke, die jeweils mehrere Haushaltsgeräte, die mit jeweiligen Adaptern verbunden sind, und eine Netzwerksteuerung aufweisen, wobei jedem Haushaltsgerät eine Adresse zugewiesen ist und wenigstens zwei Heimnetzwerke eine Kommunikationsleitung gemeinsam nutzen, wobei das Verfahren folgende Schritte umfasst:
Einstellen eines Hauscodes für jeden der Adapter, die mit den Haushaltsgeräten verbunden sind, zum Identifizieren von Heimnetzwerken; und
Empfangen eines Paketes, das den Hauscode enthält, auf der Kommunikationsleitung an den Adaptern;
Vergleichen eines Hauscodes, der für jeden der Adapter eingestellt wurde, mit dem Hauscode, der in dem Paket enthalten ist;
wobei einer der Adapter versteht, dass das Paket an diesen einen Adapter gerichtet ist, wenn die zwei Hauscodes im Ergebnis des Vergleichs übereinstimmen, und Übermitteln des Paketes zu einem daran angeschlossenen Haushaltsgerät,
**dadurch gekennzeichnet, dass** der Schritt des Einstellens eines Hauscodes die folgenden Schritte umfasst:
Inbetriebnehmen eines Hauscode-Einstellungsprogramms in der Netzwerksteuerung,
Bereitstellen einer Seriennummer des Adapters und Zugreifen auf eine Hauscode-Verwaltungsstelle im Internet in dem Programm,
Empfangen eines eigenen Hauscodes, der von der Hauscode-Verwaltungsstelle zugewiesen wurde, und Übermitteln dieses Hauscodes an den betreffenden Adapter,
woraufhin der Adapter den Hauscode in einer betreffenden Speicherregion speichert.

2. Verfahren gemäß Anspruch 2, wobei der Schritt des Bereitstellens einer Seriennummer des Adapters und des Zugreifens auf eine Hauscode-Verwaltungsstelle im Internet in dem Programm den Schritt des Vornehmens eines automatischen Zugriffs auf die Hauscode-Verwaltungsstelle, nachdem die Seriennummer für den Adapter bereitgestellt wurde, umfasst.

3. Verfahren gemäß Anspruch 1, das des Weiteren den Schritt enthält, dass die Adapter das empfangene Paket verwerfen, wenn bei dem Vergleich festgestellt wird, dass die zwei Hauscodes nicht übereinstimmen.

## Revendications

1. Méthode d'identification de réseaux domestiques multiples ayant chacun une pluralité d'appareils ménagers connectés à des adaptateurs respectifs et un contrôleur de réseau, dans laquelle une adresse est attribuée à chaque appareil ménager, et au moins deux réseaux domestiques partagent une ligne de communication, la méthode comprenant les étapes consistant à :
définir un code maison pour chacun des adaptateurs connectés aux appareils ménagers pour identifier les réseaux domestiques ; et
recevoir un paquet comprenant le code maison sur la ligne de communication au niveau des adaptateurs ;
comparer un code maison défini pour chacun des adaptateurs au code maison inclus dans le paquet ; et
faire comprendre à un des adaptateurs que le paquet est destiné à l'adaptateur en question si les deux codes maison sont en conformité suite à la comparaison, et transférer le paquet à un des appareils ménagers connectés à celui-ci,
**caractérisée en ce que** l'étape consistant à définir un code maison comprend les étapes consistant à :
exécuter un programme de définition de code maison dans un contrôleur de réseau,
fournir un numéro de série de l'adaptateur et donner accès au site de gestion de codes maison sur Internet dans le programme,
recevoir un code maison propre attribué à partir du site de gestion de codes maison et transférer ledit code maison à l'adaptateur correspondant, et
permettre le stockage par l'adaptateur du code maison sur une zone de mémoire correspondante.

2. Méthode selon la revendication 1, dans laquelle l'étape consistant à fournir un numéro de série de l'adaptateur et à donner accès à un site de gestion de codes maison sur Internet dans le programme comprend l'étape consistant à établir un accès automatique au site de gestion de codes maison une fois que le numéro de série pour l'adaptateur est fourni.

3. Méthode selon la revendication 1, comprenant en outre l'étape dans laquelle les adaptateurs ignorent le paquet reçu si les deux codes maison ne sont pas en conformité suite à la comparaison.
